# EUROPÄISCHE PATENTSCHRIFT

(11) **EP 1 312 900 B1**
(45) Veröffentlichungstag und Bekanntmachung des Hinweises auf die Patenterteilung: **27.05.2015**
(21) Anmeldenummer: 02102703.2
(22) Anmeldetag: 24.09.2001
(51) Int. Cl.: G01G 21/22

(54) **Waage mit Träger für das Wägegut**
Weighing scale with support for goods
Balance avec support pour produits

(30) Priorität: 04.10.2000 CH 20001957
(43) Veröffentlichungstag der Anmeldung: 21.05.2003
(62) Teilanmeldung aus: 01203641.4
(73) Patentinhaber: Mettler-Toledo AG, 8606 Greifensee (CH)
(72) Erfinder: Lüchinger, Paul, 8610 Uster (CH)

(56) Entgegenhaltungen:
- EP-A- 0 371 210
- EP-A- 0 897 104
- DE-A- 3 610 560
- FR-A- 2 310 553

## Beschreibung

Die Erfindung betrifft eine Waage mit einem eine Wägezelle enthaltenden Waagengehäuse und mit einem Träger zur Aufnahme des Wägeguts.

Waagen dieser Art dienen hauptsächlich als Analysenwaagen, die vielerorts in Labors Anwendung finden.

In der US 4,766,965 ist eine derartige Waage offenbart. Ein am unteren Ende des Lastaufnehmers der Wägezelle befestigter Ausleger trägt an seinem anderen Ende die Waagschale. Die Waagschale ist unmittelbar oberhalb des Bodens des Wägeraumes angeordnet, wobei ihre Verbindung mit dem sich unmittelbar unterhalb des Bodens des Wägeraums befindlichen Waagschalenträgers durch eine Durchführung am Boden des Wägeraums erfolgt. Unterhalb des Wägeraumbodens ist eine mit einem Mechanismus zum Auflegen und Abheben der Referenzgewichte versehene Kalibriervorrichtung angeordnet.

Eine weitere Waage dieser Art ist in der JP-A-62-266421 beschrieben. Hierbei sind sowohl die Waagschale als auch ein den Waagschalenträger bildender Ausleger oberhalb des Wägeraumbodens angeordnet. Der Waagschalenträger ist direkt durch eine Durchführung in der Rückwand des Wägeraumes mit den inneren Einrichtungen des Waagengehäuses verbunden.

Die DE36 10 560A1 offenbart eine Fussföneinrichtung in Verbindung mit einer Badezimmerwaäge, bei der die Standfläche als Gitter ausgestaltet ist.

Die EP 0 897 104 beschreibt eine Gitteranordnung für den Lastträger einer Waage, auf welche eine Wägeplatte geschweisst, genietet oder lösbar angeschraubt ist.

Die EP 0371 210 A2 offenbart einen Gefässhalter, der auf die Waagschale einer Präzisions- oder Analysenwaage aufgesetzt werden kann.

Die mit der Erfindung verbundene Aufgabe besteht darin, eine Waage vorzuschlagen, die kompakt gebaut ist, wenig verschmutzen kann und eine Vielzahl von Anwendungen zulässt.

Diese Aufgabe wird erfindungsgemäss durch die Merkmale des Anspruchs 1 gelöst.

Eine Waage mit einem eine Wägezelle enthaltenden Waagengehäuse und mit einem Träger zur Aufnahme des Wägeguts ist dadurch gekennzeichnet, dass der Träger als ebenes Gitter ausgebildet ist. Mit der Wägezelle ist ein L-förmiger Ausleger verbunden, an dessen senkrechtem Teil in Richtung des Wägeraums Fortsätze angebracht sind, die durch Durchführungen in der Rückwand des Wägeraums ragen und eine Koppelanordnung für das Einhängen des Träger zur Aufnahme des Wägeguts bilden. Zwischen dem Boden des Wägeraums und dem Träger eine feste oder herausnehmbare Auffangschale mit geschlossener Fläche angeordnet, was das Reinigen des Wägeraums sehr erleichtert.

Dadurch bieten sich viele mögliche Anwendungen für das Wägen in einem Labor an. Beispielsweise können Behältnisse oder Aufsätze verschiedenster Art auf das Gitter aufgesetzt und/oder an dem Gitter festgeklemmt werden. Verschüttetes Wägegut bleibt nicht auf dem Träger liegen, sondern fällt zwischen den Gitterstäben vom Gitter herab und kann nicht versehentlich mitgewogen werden.

Eine besonders günstige Ausgestaltung des Gitters, nämlich die der Ausformung der Gitterstäbe mit einen nach oben spitz zulaufenden Querschnitt, reduziert die Möglichkeit von Fehlmessungen aufgrund von verschüttetem Wägegut noch weiter. Ein gitterförmiger Träger ist überdies besonders gut geeignet für die Befestigung verschiedener Aufsätze zur Aufnahme von Wägegefässen

Gemäss einer bevorzugten Ausführungsform ist an der Rückwand des Wägeraums ein Wägelift angeordnet, wobei der Lift eine gitterförmige oder mit Lamellen versehene Liftplattform aufweist, die von unten entsprechend in das Gitter des Trägers für die Waagschale in der Weise eingreift, dass das Wägegut vom Gitter abgehoben wird. Dieser Vorgang automatisiert den Tariervorgang. Es ist nicht mehr erforderlich das Wägegut vor jedem Tariervorgang manuell wegnehmen bzw. auflegen zu müssen. Dadurch wird eine potentielle Quelle für Fehlmessungen ausgeschieden. Es können somit Langzeitmessungen durchgeführt und auch zwischen den einzelnen Wägungen Kalibrierungen vorgenommen werden.

Um das Reinigen der Waage zu erleichtern, ist die Liftplattform in einfacher Weise zerlegbar. Vorzugsweise ist der Lift motorisch antreibbar.

Die mit der Erfindung verbundenen Vorteile liegen nunmehr in der kompakten Bauweise und in der Vielseitigkeit für Anwendungen in Labors durch den modularen Aufbau. Die Erfindung zeichnet sich durch eine hohe Flexibilität und eine schnelle Umrüstbarkeit für einzelne Anwendungen aus. Darüber hinaus kann die Reinigung der einzelnen Komponenten in sehr einfacher Weise erfolgen.

Ausführungsbeispiele der Erfindung werden im folgenden in den stark schematisierten Zeichnungen dargestellt. Es zeigen:
- Fig. 1: eine Seitenansicht der Waage,
- Fig. 2A und 2B: eine dreidimensionale Darstellung des Wägeraums ohne Waagengehäuse und ohne Windschutz,
- Fig. 3A bis 3F: Aufsätze für verschiedene Anwendungen auf das als Träger zur Aufnahme des Wägeguts dienende Gitter,
- Fig. 4: ein Wägelift in dreidimensionaler Darstellung,
- Fig. 5: eine Plattform des Lifts in einer Gitterausführung mit Träger in der Seitenansicht,
- Fig. 6A und 6B: die Funktionsweise des Lifts in dreidimensionaler Darstellung,

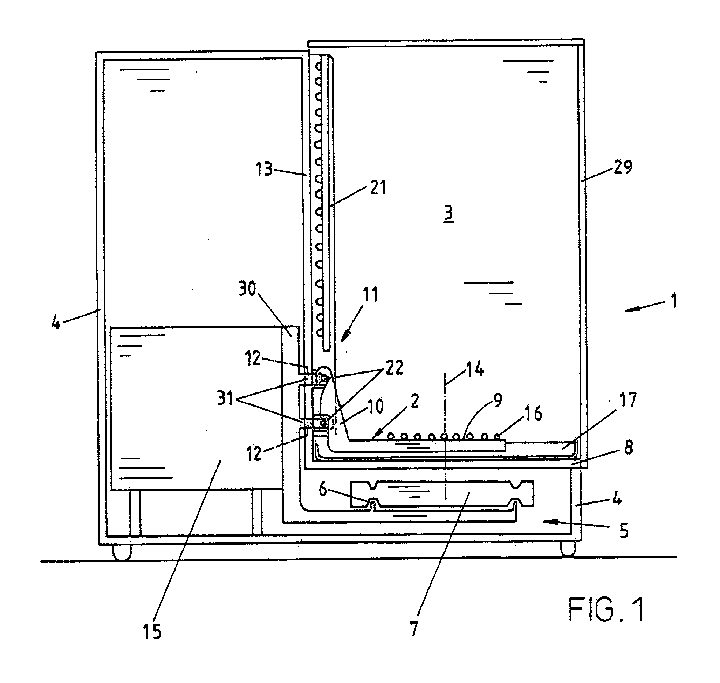

Die Figur 1 zeigt eine Seitenansicht der Waage 1 mit dem Waagengehäuse 4 und dem den Wägeraum 3 umgebenden Windschutz 29. Im linken Teil des Waagengehäuses 4 befindet sich die nicht näher dargestellte Wägezelle 15. Mit der Wägezelle 15 ist zur Krafteinleitung ein L-förmiger Ausleger 30 mit der Kalibriervorrichtung 5 verbunden, wobei im unteren Bereich des Auslegers 30 eine Auflage 6 für die Kalibriergewichte 7 vorgesehen ist. Die Kalibriervorrichtung 5 befindet sich in einem oben durch den Boden 8 des Wägeraumes 3 abgeschlossen Teil des Waagengehäuses 4. Am senkrechten Teil des L-förmigen Auslegers 30 sind in Richtung Wägeraum 3 Fortsätze 31 angebracht, die durch die Durchführungen 12 der Rückwand 13 des Wägeraumes 3 ragen. Diese Fortsätze 31 bilden mit den seitlich herausragenden Haltebolzen 22 die Koppelanordnung 11 für die Einhängungen 10 des Trägers 2. Der Träger 2 dient als Auflage für die verschiedensten Aufsätze zu unterschiedlichen Anwendungen, beispielsweise für Schalen, Laborgefässe, sonstige Behälter für Wägegüter oder für Wägegüter selbst. In diesem Beispiel ist der Träger 2 als ebenes Gitter 16 ausgebildet. Die Verwendung eines Gitters reduziert den möglicherweise Fehlmessungen verursachenden Windeinfluss, da die Oberfläche bei einem Gitter geringer ist als bei einem vollflächigen Träger.

Der Träger 2 besitzt einen Mittelpunkt für die Aufnahme des Wägeguts. Der Gewichtsschwerpunkt der Kalibriergewichte 7 befindet sich vorzugsweise auf der Achse 14 die sich bei aufgebrachtem Wägegut durch diesen Mittelpunkt (hier: durch den Flächenschwerpunkt der Trägerebene 9) erstreckt. Bedingt durch die Tatsache, dass der Boden 8 keine Durchführung für bewegliche Teile der Waage erforderlich macht, ist zwischen dem Boden 8 und dem Träger 2 eine Auffangschale 17 mit geschlossener Fläche vorgesehen. Verschüttetes Wägegut fällt somit in die Auffangschale 17 und kann nicht versehentlich mitgewogen werden. Dies ist insbesondere dann gegeben, wenn die Gitterstäbe des Gitters 16 in einer speziellen Ausführungsform einen dreieckigen nach oben spitz zulaufenden Querschnitt aufweisen. Im übrigen ist dieses System leicht zu reinigen.

An der Rückwand 13, oberhalb der seitlichen Aufhängung des Trägers 2 über die Einhängungen 10 an den sich nahe der Wand befindlichen Haltebolzen 22 der Fortsätze 31 ist im Inneren des Wägeraumes 3 ein Haltesystem 21 vorgesehen. Dieses Haltesystem 21 bietet eine Vielzahl von Erleichterungen und Anwendungen für den Wägebetrieb.

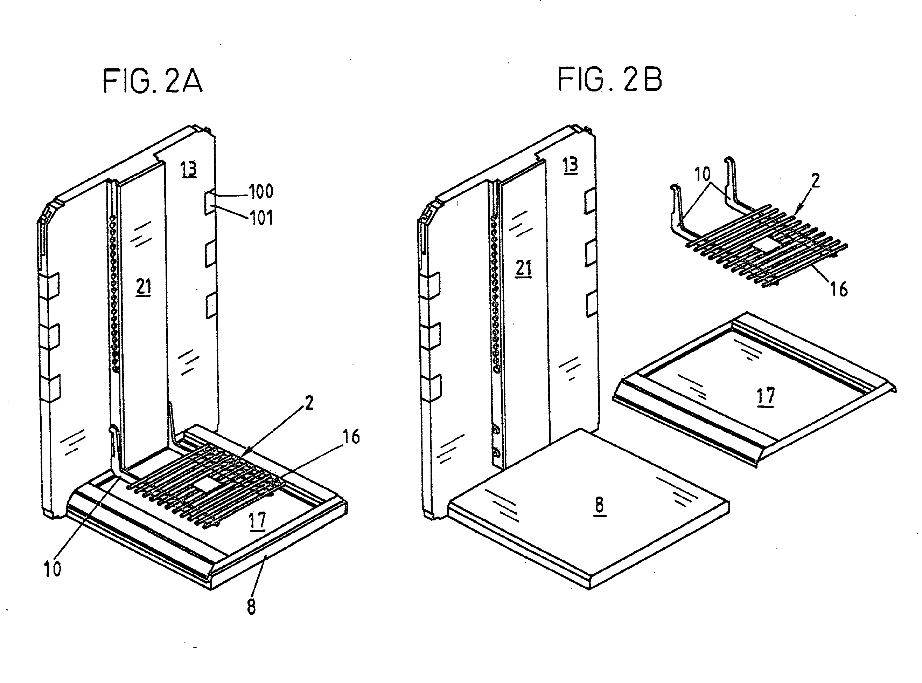

Die Figur 2A zeigt eine perspektivische Sicht in den Wägeraum 3 ohne Windschutz 29. Vom Waagengehäuse 4 sind nur gerade die die Rückwand 13 des Wägeraums 4 und die den Wägeraumboden 8 bildenden Teile gezeigt. In der Darstellung ist der Träger 2 eingehängt und die Auffangschale 17 ist eingesetzt. Die Figur 2B zeigt diese Anordnung mit ausgehängtem Träger 2 und herausgenommener Auffangschale 17.

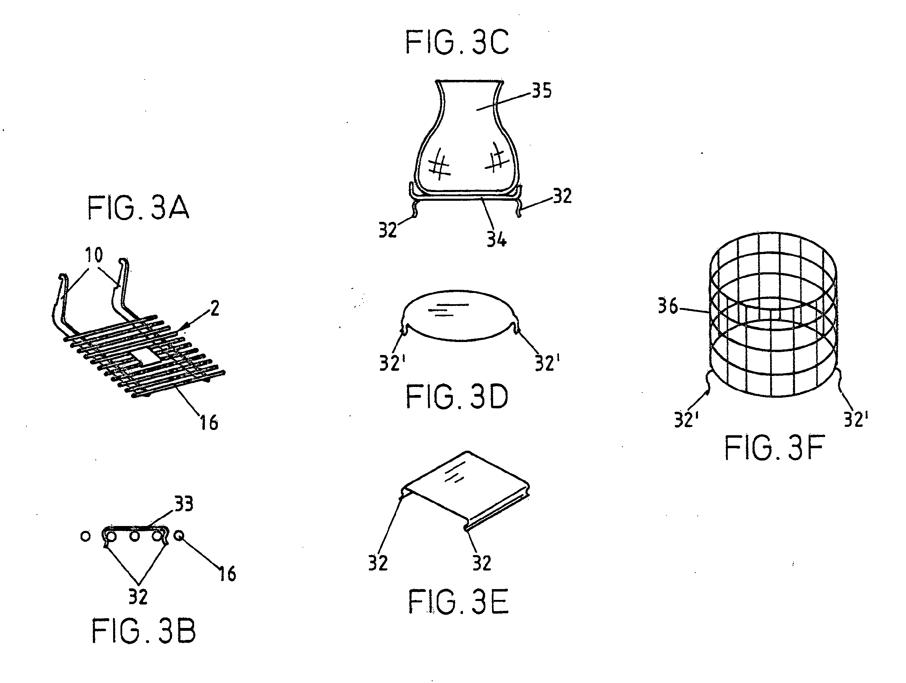

In den Figuren 3A bis 3F sind verschiedene Aufsätze für unterschiedliche Anwendungen im Zusammenhang mit dem als Gitter 16 ausgebildeten Träger 2 gezeigt. Figur 3A zeigt den Träger 2 als Gitter 16. Figur 3B zeigt eine Auflagefläche 33 mit aufklippbaren Rändern 32 als einer möglichen Befestigungsform. Denkbar sind auch schalenförmige Aufnahmeaufsätze 34 für Laborgefässe 35 (Figur 3C) oder kreisförmige Aufnahmeaufsätze, (Figur 3D) oder rechteckförmige Aufnahme-Flächen, nach Figur 3E. Die Lösung in Figur 3F stellt eine spezielle Anwendung als Gitterring 36 dar. Der Gitterring dient als Faraday-Käfig und wirkt elektrostatischen Aufladungen entgegen. Eine bevorzugte Befestigungsform ist jene mittels oben erwähnter aufklippbarer Ränder 32 oder aufklippbarer Stege 32'.

Die erfindungsgemässe Waage 1 erlaubt, insbesondere durch ein an der Rückwand 13 angeordnetes Haltesystem 21 für das Befestigen von Wägeraum-Zubehör auf beispielsweise in verschiedenen Höhen über dem Boden 8 einhängbaren Zwischenböden oder Halterungen, eine Vielzahl von vorteilhaften Anwendungen im Innern des Wägeraums 3.

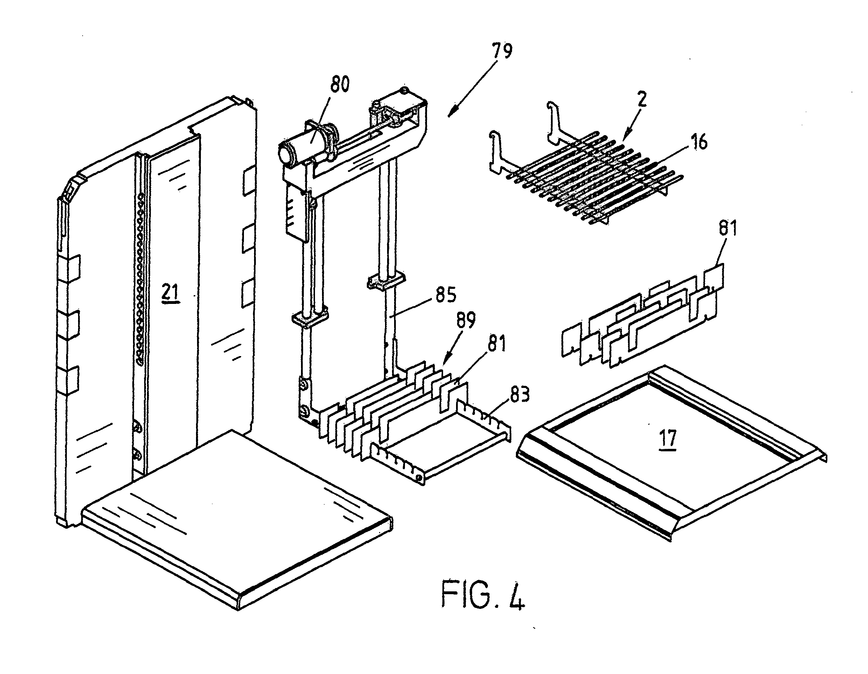

Die Figur 4 zeigt in perspektivischer Sicht einen in das Haltesystem 21 einhängbaren Wägelift 79. Der aus einem L-förmigen Gestell 85 aufgebaute Lift trägt im oberen Bereich einen Lift-Motor 80, der eine aus Armen 83 und Lamellen 81 aufgebaute Liftplattform 89 heben und senken kann. Die Lamellen 81 ragen von unten in die Zwischenräume eines als Gitter 16 ausgestalteten Trägers 2.

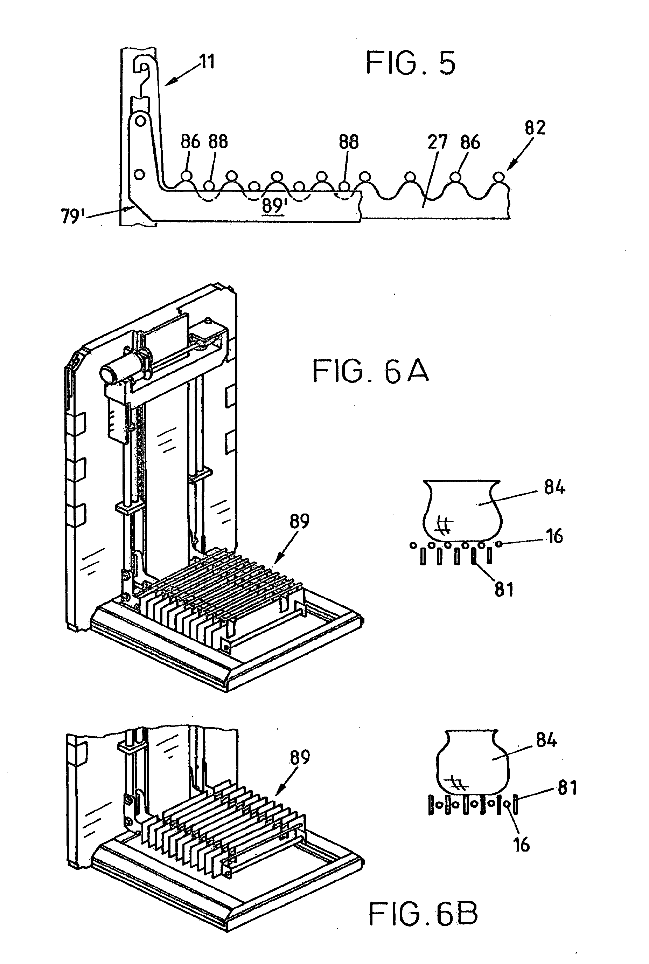

In der Figur 5 ist eine andere Ausführung des Wägelifts 79' als Ausschnitt im Bereich des Trägers 82 und der Liftplattform 89' in Seitenansicht dargestellt. Der mittels der Koppelanordnung 11 eingehängte Träger 82 zur Aufnahme des Wägegutes besitzt eine angepasste Gitterausführung in Form eines Rechens, bei dem die beiden seitlichen Begrenzungen 27 des Trägers 82 auf ihrer Oberseite ein sinusförmiges Längs-Profil besitzen, wobei auf den Kuppen die Gitterstäbe 86 befestigt sind. Zwischen den Gitterstäben 86 des Trägers 82, in den Tälern des sinusförmigen LängsProfils liegen die Gitterstäbe 88 des Lifts 79' im normalen Wägebetrieb unterhalb der Gitterstäbe 86 des Trägers 82 und gelangen durch Anheben des Lifts 79' in eine Lage oberhalb der Gitterstäbe 86 des Trägers 82.

Die Funktionsweise des Liftes 79 ist beispielhaft für die Lamellenausführung in den Figuren 6A und 6B dargestellt. Figur 6A zeigt den Lift 79 in der Wiegestellung, wobei sich das zu wiegende Gefäss 84 auf dem als Gitter 16 ausgebildeten Träger 2 befindet. Die Lamellen 81 sind abgesenkt. Figur 6B zeigt die Ruhestellung. Das Gefäss 84 steht auf den angehobenen Lamellen 81. Der mit der Waage verbundene, als Gitter 16 ausgebildete Träger 2 ist unbelastet. Die Trägerfläche des Liftes ist durch den lamellenartigen Aufbau leicht zu reinigen. Das gleiche gilt für den Träger 2 der eigentlichen Waage. Eine nutzbringende Anwendung dieser Einrichtung ergibt sich für Langzeitanwendungen der Waage, beispielweise für die Langzeitbeobachtung einer Wägung, bei welcher in vordefinierten Abständen ein Tarieren der Waage, in diesem Falle ohne Gefäss, notwendig wird. Auch die Durchführung einer Kalibrierung der Waage, beispielsweise während des Verlaufs einer Langzeitanwendung der Waage, ist denkbar. In diesem Falle wird das das Wägegut enthaltende Gefäss 84 mit dem Wägelift 79, 79' vom Träger 2, 82 abgehoben, das Kalibriergewicht 7 auf die Auflage 6 der Kalibrieranordnung 5 aufgebracht und gewogen, und nach Berechnen und Abspeichern der neuen Daten für die Kalibration der Waage 1 wird das das Wägegut enthaltende Gefäss 84 wieder durch Absenken des Wägelifts 79, 79' auf den Träger 2, 82 aufgesetzt und es kann weiter gearbeitet werden.

Als weitere Anwendung des Wägelifts soll auch auf das Mehrfach-Wiegen einer Probe zur Ermittlung statistischer Grössen, wie etwa der Standardabweichung, ohne dass der Bediener die Probe von Hand auflegen oder wieder abheben müsste, hingewiesen werden.

Für Messeinrichtungen und Experimentiervorrichtungen jeglicher Art, die im Wägeraum installiert werden, sind elektrische Zufuhrleitungen oder auch Schläuche zur Zuführung von Flüssigkeiten durch die in der Figur 2 dargestellten und dort mit Clips 101 verschlossenen Aussparungen 100 zuführbar, wie im Detail in der Parallel-Anmeldung EP-A-1 195 585 beschrieben ist.

### Bezugszeichenliste

- 1: Waage
- 2: Träger
- 3: Wägeraum
- 4: Waagengehäuse
- 5: Kalibriervorrichtung
- 6: Auflage
- 7: Kalibriergewicht
- 8: Boden
- 9: Trägerebene
- 10: Einhängung
- 11: Koppelanordnung
- 12: Durchführungen
- 13: Rückwand
- 14: Achse
- 15: Wägezelle
- 16: Gitter
- 17: Auffangschale
- 21: Haltesystem
- 22: Haltebolzen
- 27: seitliche Begrenzungen
- 29: Windschutz
- 30: Ausleger
- 31: Fortsätze
- 32: aufklippbare Stege
- 32': aufklippbare Ränder
- 33: Auflagefläche
- 34: Aufnahmeaufsatz
- 35: Laborgefäss
- 36: Gitterring
- 79: Lift
- 79': Lift
- 80: Lift-Motor
- 81: Lamellen
- 82: Träger
- 83: Arme
- 84: Gefäss
- 85: Gestell
- 86: Gitterstäbe des Trägers
- 88: Gitterstäbe des Lifts
- 89: Liftplattform
- 89': Liftplattform
- 100: Durchführungen
- 101: Clips

## Patentansprüche

1. Waage (1) mit einem einen Wägeraum (3) umgebenden Windschutz (29) und mit einem eine Wägezelle (15) enthaltenden Waagengehäuse (4) und mit einem Träger (2) zur Aufnahme des Wägeguts, wobei der Träger (2) als ebenes Gitter (16) ausgebildet ist, wobei mit der Wägezelle (15) ein L-förmiger Ausleger (30) verbunden ist, an dessen senkrechtem Teil in Richtung des Wägeraums (3) Fortsätze (31) angebracht sind, die durch Durchführungen (12) in der Rückwand (13) des Wägeraums (3) ragen und eine Koppelanordnung für das Einhängen des Trägers (2) zur Aufnahme des Wägeguts bilden, und wobei zwischen dem Boden (8) des Wägeraums (3) und dem Träger (2) eine feste oder herausnehmbare Auffangschale (17) mit geschlossener Fläche angeordnet ist.

2. Waage (1) nach Anspruch 1, wobei die Gitterstäbe des Gitters (16) einen nach oben spitz zulaufenden Querschnitt aufweisen.

3. Waage (1) nach Anspruch 1 oder 2, wobei verschiedene Aufsätze (33, 34) zur Aufnahme von Wägegefässen am Gitter (16) befestigbar sind.

4. Waage (1) nach einem der Ansprüche 1 bis 3, wobei ein mit dem Träger (2) zusammenwirkender Wägelift (79, 79') vorhanden ist.

5. Waage (1) nach Anspruch 4, wobei die Waage einen Windschutz aufweist, der einen Wägeraum umgibt, der Wägeraum (3) nach einer Seite von einer Rückwand (13) begrenzt wird, und der Wägelift (79, 79') an der Rückwand anbringbar ist.

6. Waage (1) nach Anspruch 4 oder 5, wobei der Wägelift (79) eine gitterförmige, aus Lamellen (81) bestehende Liftplattform (89) aufweist und der Träger (2) als ebenes Gitter (16) ausgebildet ist, wobei die Lamellen (81) des Wägelifts (79) in das Gitter (16) des Trägers (2) in der Weise eingreifbar angeordnet sind, dass das Wägegut vom Träger (2) mittels der Lamellen (81) abgehoben werden kann.

7. Waage (1) nach Anspruch 4 oder 5, wobei sowohl der Träger (82) als auch die Liftplattform (89') als ebenes Gitter ausgebildet sind, wobei die Gitterstäbe der Liftplattform (89') zwischen den Gitterstäben des Trägers in der Weise eingreifbar angeordnet sind, dass das Wägegut vom Träger mittels der Liftplattform (89) abgehoben werden kann.

8. Waage (1) nach einem der Ansprüche 4 bis 7, wobei ein Motor (80) vorhanden ist zum motorischen Betrieb des Wägelifts (79, 79').

## Claims

1. Balance (1) with a weighing compartment (3) surrounded by a draft shield (29) and with a balance housing (4) containing a weighing cell (15), and with a weighing-load carrier (2) to support the weighing object, wherein the weighing-load carrier (2) is configured as a level grate, wherein an L-shaped cantilever (30) is connected to the weighing cell, the vertical portion of the L-shaped cantilever (30) having projections (31) extending towards the weighing compartment (3) and standing out through passage openings (12) of the rear wall (13) of the weighing compartment (3) forming a coupling arrangement for coupling the weighing-load carrier (2) to support the weighing object; and wherein between the floor (8) of the weighing compartment (3) and the weighing-load carrier (2) a fixedly installed or removable spill-collector pan (17) with an uninterrupted surface is arranged.

2. Balance according to claim 1, wherein the grate (16) has bars of a roof-like triangular profile with a ridge on top.

3. Balance according to claim 1 or 2, wherein the balance has attachments (33, 34) configured to hold weighing containers and wherein said attachments are adapted to be fastened to the grate (16).

4. Balance according to one of the claims 1 to 3, further comprising a load-relief system (79, 79') cooperating with the weighing load carrier (2).

5. Balance according to claim 4, wherein the balance comprises a draft shield surrounding the weighing compartment, the weighing compartment being delimited by a rear wall and wherein the load-relief system (79, 79') is configured to be attached to the rear wall.

6. Balance according to claim 4 or 5, wherein the load-relief system (79) comprises a grid-shaped lift platform (89) with lamellar grid members (81), and the weighing-load carrier (2) is configured as a level grate (16), wherein the lamellar grid members (81) of the load-relief system (79) are arranged so that they reach through the grate (16) of the weighing-load carrier (2) in such a manner that a weighing object sitting on the weighing-load carrier (2) is lifted off the weighing-load carrier by the lamellar grid members (81).

7. Balance according to claim 4 or 5, wherein both, the weighing-load carrier (82) and the lift platform (89') are configured as a level grate, wherein the grate bars (88) of the lift-platform (89') are arranged to pass between the grate bars (16) of the weighing-load carrier (82) in such a manner that a weighing object sitting on the weighing-load carrier (82) can be lifted off the weighing-load carrier by means of the lift platform (89).

8. Balance according to one of the claims 4 to 7, further comprising a motor (80) to drive the load-relief system (79, 79').

## Revendications

1. Balance (1) avec un pare-vent (29) entourant une chambre de pesage (3) et avec un boîtier de balance (4) contenant une cellule de pesage (15) et avec un support (2) destiné à recevoir l'objet à peser, dans laquelle le support (2) est conçu comme une grille plane (16), dans quelle balance un bras en forme de L (30) est relié à la cellule de pesage (15), sur la partie verticale duquel sont fixés des prolongements (31) en direction de la chambre de pesage (3), lesquels traversent des passages (12) dans la paroi arrière (13) de la chambre de pesage (3) et forment un moyen d'accouplement pour l'accrochage du support (2) en vue de la réception de l'objet à peser, et dans laquelle un bac collecteur (17) fixe ou amovible avec une surface fermée est agencé entre le fond (8) de la chambre de pesage (3) et le support (2).

2. Balance (1) selon la revendication 1, dans laquelle les barres de grille de la grille (16) présentent une section transversale s'affinant en pointe vers le haut.

3. Balance (1) selon la revendication 1 ou 2, dans laquelle différentes élément de logement (33, 34) peuvent être fixées sur la grille (16) pour la réception de récipients de pesage.

4. Balance (1) selon l'une des revendications 1 à 3, dans laquelle il est prévu un élévateur de pesage (79, 79') coopérant avec le support (2).

5. Balance (1) selon la revendication 4, dans laquelle la balance comporte un pare-vent entourant une chambre de pesage, la chambre de pesage (3) étant délimitée d'un côté par une paroi arrière (13), et l'élévateur de pesage (79, 79') pouvant être fixé à la paroi arrière.

6. Balance (1) selon la revendication 4 ou 5, dans laquelle l'élévateur de pesage (79) comporte une plateforme d'élévateur (89) en forme de grille constituée de lamelles (81) et le support (2) est conçu comme une grille plane (16), les lamelles (81) de l'élévateur de pesage (79) étant agencées de façon à pouvoir s'engager dans la grille (16) du support (2) de telle façon que l'objet à peser peut être soulevé du support (2) au moyen des lamelles (81).

7. Balance (1) selon la revendication 4 ou 5, dans laquelle aussi bien le support (82) que la plateforme d'élévateur (89') sont conçus comme une grille plane, dans laquelle les barres de grille de la plateforme d'élévateur (89') sont agencées de façon à pouvoir s'engager entre les barres de grille du support de telle façon que l'objet à peser peut être soulevé du support au moyen de la plateforme d'élévateur (89).

8. Balance (1) selon l'une des revendications 4 à 7, dans laquelle il est prévu un moteur pour le fonctionnement motorisé (80) de l'élévateur de pesage (79, 79').
